# EUROPÄISCHE PATENTANMELDUNG

(11) **EP 1 411 268 A1**
(43) Veröffentlichungstag der Anmeldung: **21.04.2004**
(21) Anmeldenummer: 02405892.7
(22) Anmeldetag: 17.10.2002
(51) Int. Cl.: F16G 11/00

(54) **Drahtseil mit einem Verbindungsmittel**

(71) Anmelder: FATZER AG, CH-8590 Romanshorn (CH)
(72) Erfinder: Eicher, Bernhard, 9315 Winden (CH)
(74) Vertreter: Luchs, Willi

(57) **Zusammenfassung**

Bei einem Drahtseil (1) mit einem Verbindungsmittel, welches zur Befestigung des Drahtseiles (1) an einem Gegenstand dient, ist das Drahtseilende (1a) unmittelbar an seinem Umfang mit einem das Verbindungsmittel bildenden Gewinde (7) für eine Verschraubung mit dem Gegenstand versehen. Das Gewinde (7) weist insbesondere eine die Verseil- bzw. Schlagrichtung kreuzende Steigungsrichtung auf. Dieses Drahtseil mit dem als Verbindungsmittel versehenen Gewinde ist im Vergleich zu herkömmlichen Verankerungen wesentlich einfacher und kostengünstiger in der Herstellung bzw. der Montage.

## Beschreibung

Die Erfindung betrifft ein Drahtseil mit einem Verbindungsmittel, welches zur Befestigung des Drahtseiles an einem Gegenstand dient, wobei das Drahtseil wendelförmig mit einer Verseil- bzw. Schlagrichtung hergestellt ist.

Drahtseile aus hochfesten Drähten, die zu verschiedensten Zwecken verwendet werden (z.B. im Bauwesen als Trag- oder Spannseile, Geländer, Umzäunungen etc.), ermöglichen eine optisch leichte, filligrane Bauweise und sind auch montagetechnisch vorteilhaft, da das Gewicht der Einzelteile relativ klein ist. An die Drahtseile und ihre Verankerungen werden jedoch hohe Anforderungen gestellt.

Eine standardisierte Fertigung ist nicht möglich, da projektbezogen geliefert werden muss. Meist braucht es in einem Projekt viele unterschiedliche Seildurchmesser, unterschiedliche Längen und verschiedenste Endverbindungen, wobei viele verbindliche Massangaben (z.B. für die vielen verschiedenen kurzen Seile) erst im letzten Moment mitgeteilt werden.

Die Drahtseile werden in der Regel mit ihren Drahtseilenden in sogenannten Anpressfittingen verankert, d.h. in plastisch verformbaren, mit dem Bauelement verbindbaren (zum Beispiel verschraubbaren) Endstücken, mit welchen sie infolge der plastischen Verformung kraftschlüssig verbunden sind. Eine derartige Verbindung ist beispielsweise in der EP-A-0 777 067 offenbart.

Ausgehend von diesen bekannten Drahtseilen mit Verbindungsmitteln wurde der vorliegenden Erfindung die Aufgabe zugrundegelegt, eine noch einfachere und kostengünstigere Verbindung des Drahtseiles zu schaffen, die ausserdem eine grosse Flexibilität bei der Drahtseillieferung und eine rationelle projektunabhängige Herstellung ermöglicht.

Diese Aufgabe wird erfindungsgemäss dadurch gelöst, dass das Drahtseil, insbesondere das Drahtseilende, unmittelbar an seinem Umfang mit einem das Verbindungsmittel bildenden Gewinde für eine Verschraubung mit dem Gegenstand versehen ist, wobei das Gewinde insbesondere eine die Verseil- bzw. Schlagrichtung kreuzende Steigungsrichtung aufweist.

Das erfindungsgemässe Drahtseil mit dem als Verbindungsmittel versehenen Gewinde ist im Vergleich zu herkömmlichen Verankerungen wesentlich einfacher und kostengünstiger in der Herstellung bzw. der Montage.

Die bisher übliche Verwendung von zusätzlichen, plastisch deformierbaren Verbindungs- bzw. Endstücken, wie sie z.B. aus der EP-A-0 777 067 bekannt sind, entfällt. Dies bringt noch den zusätzlichen Vorteil mit sich, dass am Drahtseilende keine Verdickung entsteht, so dass das Drahtseil, auf Bobinen gewickelt, sozusagen endlos, ohne Längung, geliefert und erst auf der Baustelle konfektioniert werden kann. Dies ermöglicht eine rationelle projektunabhängige Herstellung und schnelle Lieferfähigkeit. Von Bedeutung sind auch die lagertechnischen Vorteile; eine Lagerhaltung von diversen Seilen ist nicht mehr notwendig. Auch fallen weniger Abfälle an.

Als zusätzliche besonders geeignete Anwendung insbesondere bei Verwendung eines Drahtseils mit einer Festigkeit von bis zu 1770 N/mm² und mehr, also einem hochfesten Seil, kann darin gesehen werden, dass ein solches Seil mit der erfindungsgemässen Verschraubung für Armierungen, Verankerungen, Verstärkungen und ähnlichem in Beton eingesetzt wird. Damit kann gegenüber von herkömmlichen Armierungsstäben mit einer Festigkeit von normalerweise 600 N/mm² eine Gewichtseinsparung von bis zu 60% erreicht werden.

Weitere bevorzugte Ausgestaltungen des erfindungsgemässen Drahtseils bilden den Gegenstand der abhängigen Ansprüche.

Die Erfindung wird nachfolgend anhand der Zeichnung näher erläutert. Es zeigen rein schematisch:
- Fig. 1: ein erfindungsgemässes Drahtseilende in Seitenansicht;
- Fig. 2: im vergrösserten Massstab ein Ausführungsbeispiel eines Litzenseiles im Querschnitt;
- Fig. 3: ein Ausführungsbeispiel eines Spiralseiles im Querschnitt;
- Fig. 4: eine Variante eines vollverschlossenen Seiles im Querschnitt, und
- Fig. 5: eine Variante eines Spiraldrahtseils im Querschnitt.

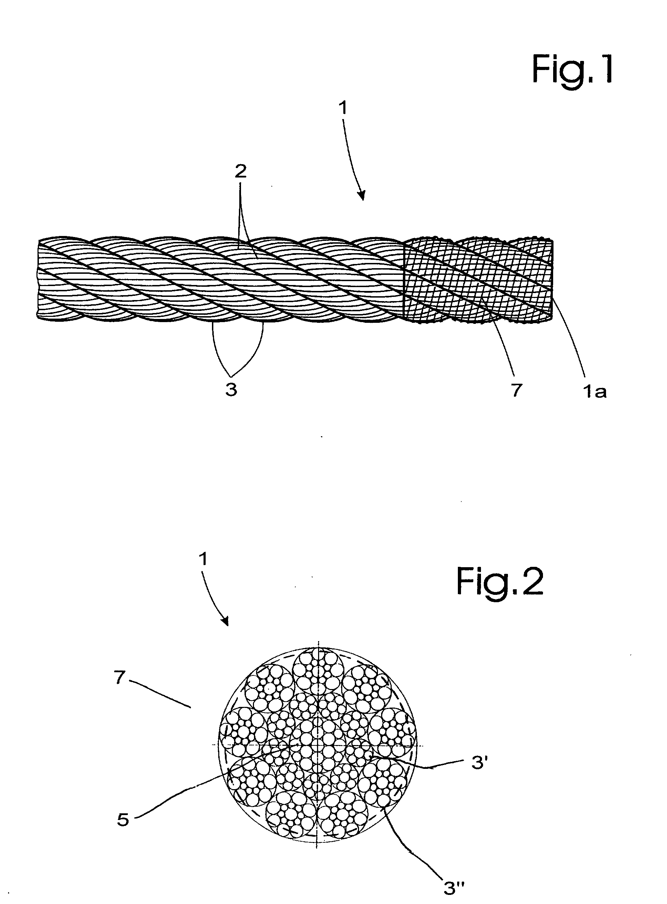

Fig. 1 stellt schematisch einen Teil eines Drahtseiles 1 dar, bei dem es sich um ein Spiralseil bzw. ein Litzenseil handelt. Derartige Drahtseile werden beispielsweise im Bauwesen zu verschiedensten Zwecken verwendet, so z.B. als Trag- oder Spannseile, Geländer, Umzäunungen etc. In der Regel werden mehrere hochfeste Drähte 2 zu einer Litze 3 zusammengedreht, und mehrere Litzen 3 um eine Seele geschlagen (gedrillt), rechtsgängig oder linksgängig.

Ein Ausführungsbeispiel eines möglichen Litzenseils im Querschnitt ist in Fig. 2 dargestellt, bei dem die Litzen 3', 3" in zwei Lagen um die bereits erwähnte Seele 5 geschlagen sind, wobei sowohl die aus Drähten gleichen Durchmessers bestehenden Innenlitzen 3' als auch die Drähte verschiedener Durchmesser umfassenden Aussenlitzen 3" gleichmässig in je einem Kreis angeordnet sind, wobei diese Aussenlitzen 3" kompaktiert oder verdichtet sein können. Die Seele 5 besteht vorteilhaft aus einer Stahlseele (eine Herzlitze aus Stahldrähten); es könnte sich jedoch auch um einen Faserstoff (Hanfseele, Polypropylen) oder ähnlichem handeln.

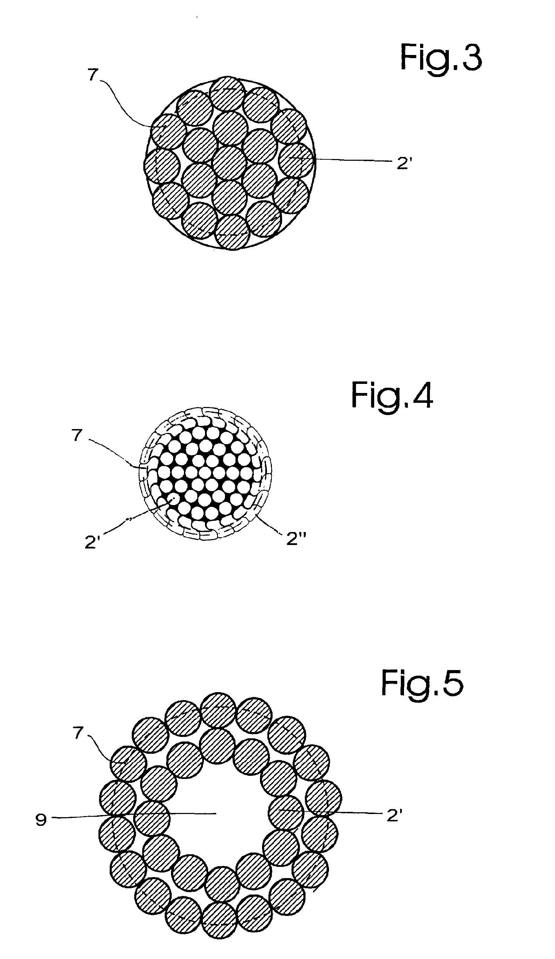

Fig. 3 zeigt ein Ausführungsbeispiel eines Spiralseiles, das aus Drähten 2' gleichen Durchmessers hergestellt wird. In der Regel werden in der Anzahl 7, 19, 37 oder 61 Drähte verwendet.

Beim Drahtseil 1 könnte es sich aber auch um ein sogenanntes vollverschlossenes Seil handeln, dessen möglicher Querschnitt aus Fig. 4 ersichtlich ist. Um einen Kern aus Runddrähten 2' des gleichen Durchmessers herum ist eine äussere Lage aus Profildrähten 2" in Z-Form angeordnet, durch welche das Seil an der Oberfläche verschlossen ist. Die Profildrähte 2" könnten auch in zwei Lagen angeordnet sein.

Selbstverständlich könnte das Drahtseil eine andere Anzahl, Form und Anordnung von Drähten und/oder Litzen aufweisen. Möglich wäre z.B auch ein halbverschlossenes Seil, dessen äussere Lage aus abwechselnd runden Drähten und Profildrähten in 1-Form besteht. Als Material wird vorzugsweise verzinkter oder mit Zn/Al beschichteter, hochfester Stahl oder Chromnickelstahl mit einer hohen Nennfestigkeit von bis zu 1770 N/mm² oder höher verwendet.

Gemäss Fig. 1 ist zur Verankerung des Drahtseiles 1 in einem die auf den Drahtseil 1 ausgeübten Zugkräfte aufnehmenden Gegenstand erfindungsgemäss am Umfang des Drahtseilendes 1a ein Gewinde 7 angefertigt, mittels welchen das Drahtseilende 1a mit dem in der Zeichnung nicht näher dargestellten Gegenstand direkt verschraubbar ist. Dies bedeutet, dass die bisher übliche Verwendung von zusätzlichen, plastisch deformierbaren Verbindungs- bzw. Endstücken, wie sie beispielsweise aus der EP-A-0 777 067 bekannt sind, entfällt.

Das Gewinde 7 wird im spanlosen Gewindewalzen-Verfahren, auch Gewinderollen genannt, auf das Drahtseilende 1a aufgerollt, derart, dass die Steigungsrichtung des Gewindes 7 zur Verseilrichtung (bei einem Spiralseil) bzw. der Schlagrichtung (bei einem Litzenseil) des Drahtseiles 1 kreuzend angeordnet ist. Handelt es sich also beispielsweise um ein rechtsgängiges Drahtseil 1, so wird ein linksgängiges Gewinde 7 gefertigt und umgekehrt. Selbstverständlich kann das Gewinde 7 auch durch ein spanabhebendes Verfahren, beispielsweise durch Drehen oder Fräsen, erzeugt werden.

Bei mehrlagigen Litzen, bei denen die Lagen abwechselnd rechts- und linksgängig sein können, ist selbstverständlich die Verseil- bzw. Schlagrichtung der äussersten Lage ausschlaggebend, wie zum Beispiel die aus Aussenlitzen 3" zusammengesetzte Lage nach Fig. 2, die äussere Lage aus Drähten 2' nach Fig. 3 oder die Profildrähten 2" in Z-Form bestehende äussere Lage nach Fig. 4.

Beim Gewinde 7 kann es sich um ein normales oder - mit Vorteil- um ein Grobgewinde handeln. Das Gewinde 7 ist in Fig. 2 bis 4 jeweils mit einer gestrichelten Kreislinie angedeutet. Dabei ist gut ersichtlich, dass insbesondere die vollverschlossenen Seile optimale Bedingungen für die erfindungsgemässe Verbindungsart bieten.

Durch das Aufrollen des Gewindes 7 werden die äusseren Drähte bzw. Litzen plastisch verformt und auf die inneren gedrückt. (Zumindest die äusseren Drähte bzw. Litzen sollten daher aus einem Material mit guter plastischer Verformbarkeit bestehen). Das Drahtseilende 1a wird dann mit dem die auf den Drahtseil 1 ausgeübten Zugkräfte aufnehmenden Bauelement über das Gewinde 7 sowie ein aus der Zeichnung nicht ersichtliches Gegengewinde eines entsprechenden Mutterstückes kraftschlüssig verbunden.

Das Drahtseil könnte im Rahmen der Erfindung auch derart ausgestaltet sein, dass die Innendrähte mit einer hohen Festigkeit und die das Gewinde 7 aufweisenden Aussendrähte 2' bzw. Z-Profildrähte 2" mit einer niedrigeren Festigkeit versehen wären, um die Herstellung von Aussengewinden zu ermöglichen, die kompliziertere oder designmässig ästhetische Formen aufweisen. Dies wäre insbesondere für Anwendungen im Architekturbereich von Nutzen.

Im Prinzip könnten aber auch im umgekehrten Sinne die Aussendrähte 2' bzw. Z-Profildrähte 2" mit einer hohen Festigkeit und die Innendrähte mit einer niedrigen Festigkeit versehen sein. Dies könnte beispielsweise bei speziellen Anforderungen an die Elastizitäts-, Biege- oder Dehneigenschaften von Vorteil sein. Durch diese Schaffung eines weichen Kerns könnte allenfalls eine bessere Verformbarkeit oder ein besseres Zusammendrücken des Seils ermöglicht werden.

Bei einem Drahtseil beispielsweise nach Fig.3 oder Fig.4 könnten die Aussendrähte aus INOX, also rostfreiem Stahl mit einem eher niedrigeren Festigkeitswert, indessen die Innendrähte aus einem hochfesten Stahl mit einer Beschichtung aus Zink oder Zink/Aluminium oder dergleichen hergestellt sein.

Zweckmässigerweise müsste dann ein rohrförmiges Isolierband, bspw. ein Wickelband, zwischen diese Innen- und Aussendrähte angeordnet werden, um eine mögliche elektrochemische Spannungskorrosion zwischen diesen verhindern zu können.

Fig.5 zeigt eine weitere Variante eines erfindungsgemässen Spiraldrahtseils, das wiederum im Rahmen der Erfindung mit einem Gewinde 7 vorzugsweise im Endbereich versehen ist. Bei diesem Spiraldrahtseil sind die Kerndrähte mit 1 bzw. 6 Drähten weggelassen, und es ist somit durch die 12 bzw. 18 Reihen von Drähten ein sich durch das gesamte Seil erstrekkender Hohlraum 9 gebildet, der dazu dient, dass in denselben bei der Verwendung als Ankerstab oder ähnlichem ein Medium, insbesondere Mörtel, hinein- bzw. durchgepumpt werden kann. Es ist aber nicht ausgeschlossen, dass auch ein elektrisches Kabel oder dergleichen durch diesen Hohlraum 9 gezogen werden könnte.

Selbstverständlich liesse sich diese Bildung eines Hohlraumes 9 auch auf ein Drahtseil mit Litzen applizieren, bei dem zweckmässigerweise die Seele (Siehe Fig.2 - Seele 5) weggelassen würde.

Im Prinzip könnte die Verseil- bzw. Schlagrichtung des Seils auch gerade in Seilrichtung verlaufen, d.h. mit parallel zueinander verlaufenden Litzen oder Drähten. Das Gewinde könnte dann mit Links- oder Rechtssteigung in Kreuzung zu den Litzen bzw. Drähten am Umfang eines solchen Seils hergestellt sein.

Ein erfindungsgemässes Drahtseil gemäss den oben erläuterten Varianten kann auch mit einer Festigkeit von bis zu 1770 N/mm² oder höher, also einem hochfesten Seil, insbesondere bei Verwendung für Armierungen, Verankerungen, Verstärkungen und ähnlichem in Beton eingesetzt werden. Damit kann gegenüber von herkömmlichen Armierungsstäben mit einer Festigkeit von normalerweise 600 N/mm² eine Gewichtseinsparung von bis zu 60% erreicht werden.

Beispielsweise könnte ein solches Drahtseil als Seilanker für Steinschlagund Lawinenschutzsysteme verwendet werden, wie dies in der Druckschrift EP-A-0 557 241 erläutert ist, bei dem das geschlaufte Drahtseil erfindungsgemäss an beiden Enden mit je einem Gewinde versehen wäre, an welchen entsprechende Muffen angeschraubt werden könnten, die zusammen mit den Drahtseilenden einbetoniert würden. Somit könnte eine verbesserte Verankerung eines solchen Schutzsystemes, die nicht zwangsweise projektbezogen ist, erzielt werden.

## Patentansprüche

1. Drahtseil mit einem Verbindungsmittel, welches zur Befestigung des Drahtseiles (1) an einem Gegenstand dient, wobei das Drahtseil (1) wendelförmig mit einer Verseil- bzw. Schlagrichtung hergestellt ist, **dadurch gekennzeichnet, dass**
das Drahtseil (1), insbesondere das Drahtseilende (1a), unmittelbar an seinem Umfang mit einem das Verbindungsmittel bildenden Gewinde (7) für eine Verschraubung mit dem Gegenstand versehen ist, wobei das Gewinde (7) insbesondere eine die Verseil- bzw. Schlagrichtung kreuzende Steigungsrichtung aufweist.

2. Drahtseil nach Anspruch 1, **dadurch gekennzeichnet, dass** bei einem aus mehreren Lagen (3', 3") zusammengesetzten Drahtseil (1) das Gewinde (7) eine die Schlagrichtung der äusseren Lage kreuzende Steigungsrichtung aufweist.

3. Drahtseil nach Anspruch 1 oder 2, **dadurch gekennzeichnet, dass** das Gewinde (7) im spanlosen Gewindewalzen-Verfahren auf das Drahtseilende (1a) aufgerollt ist.

4. Drahtseil nach einem der vorhergehenden Ansprüche 1 bis 3, **dadurch gekennzeichnet, dass** das Gewinde (7) durch ein spanabhebendes Verfahren, beispielsweise durch Drehen oder Fräsen, erzeugt ist.

5. Drahtseil nach einem der vorhergehenden Ansprüche 1 bis 4, **dadurch gekennzeichnet, dass** die Innendrähte mit einer hohen Festigkeit und die Aussendrähte (2') bzw. die äusseren Z-Profildrähte (2"), welche das Gewinde (7) aufweisen, mit einer niedrigeren Festigkeit versehen sind, oder vice versa, dass die Innendrähte mit einer geringeren Festigkeit als die Aussendrähte (2') bzw. die äusseren Z-Profildrähte (2") versehen sind.

6. Drahtseil nach einem der vorhergehenden Ansprüche 1 bis 4, **dadurch gekennzeichnet, dass** die mit dem Gewinde (7) versehenen Aussendrähte aus INOX, also rostfreiem Stahl mit einem niedrigeren Festigkeitswert, indessen die Innendrähte aus einem hochfesten Stahl mit einer Beschichtung aus Zink oder Zink/Aluminium oder dergleichen hergestellt sind.

7. Drahtseil nach Anspruch 6, **dadurch gekennzeichnet, dass** ein Isolierband zwischen diese Innen- und Aussendrähte angeordnet ist, um eine mögliche elektrochemische Spannungskorrosion zwischen diesen zu verhindern.

8. Verwendung eines Drahtseiles nach einem der vorhergehenden Ansprüche 1 bis 7, **dadurch gekennzeichnet, dass** das Drahtseil (1) insbesondere bei einer vorgesehenen Festigkeit von bis zu 1770 N/mm² und mehr, also einem hochfesten Seil, für Armierungen, Verankerungen, Verstärkungen und ähnlichem in Beton eingesetzt wird.

9. Verwendung eines Drahtseils nach Anspruch 8, **dadurch gekennzeichnet, dass** die Kerndrähte bzw. die Seele des Drahtseils weggelassen und somit ein sich durch das gesamte Seil erstreckender Hohlraum (9) gebildet ist, der vorzugsweise dazu dient, dass in denselben bei der Verwendung als Ankerstab oder ähnlichem ein Medium, beispielsweise Mörtel, hinein- bzw. durchgepumpt werden kann.
